# EUROPÄISCHE PATENTSCHRIFT

(11) **EP 1 192 865 B1**
(45) Veröffentlichungstag und Bekanntmachung des Hinweises auf die Patenterteilung: **10.05.2006**
(21) Anmeldenummer: 01122699.0
(22) Anmeldetag: 01.10.2001
(51) Int. Cl.: A23K 1/16, A23K 1/00, A23N 17/00

(54) **Verfahren und Vorrichtung zur Einmischung von Zusatzstoffen während der Konditionierung von Tierfutter**
Method and system for mixing an additive during the conditioning of animal foodstuffs
Procédé et dispositif pour mélanger un additif pendant le conditionnement de produits alimentaires pour animaux

(30) Priorität: 02.10.2000 DE 10048868
(43) Veröffentlichungstag der Anmeldung: 03.04.2002
(73) Patentinhaber: BASF Aktiengesellschaft, 67056 Ludwigshafen (DE)
(72) Erfinder: Heinzl, Wolfgang, 67157 Wachenheim (DE); Braun, Jörg, 76877 Offenbach (DE); Betz, Roland, 67150 Niederkirchen (DE); Cousins, Barton, Belvidere J 07823 (US); Harz, Hans-Peter, 67373 Dudenhofen (DE); Heindl, Ulrich, Hong Kong (CN)
(74) Vertreter: Isenbruck, Günter

(56) Entgegenhaltungen:
- GB-A- 2 241 862
- US-A- 3 139 342
- US-A- 5 480 673
- US-A- 5 598 770
- US-A- 5 773 070

## Beschreibung

Die Erfindung betrifft ein Verfahren sowie eine Vorrichtung zur Einmischung von Zusatzstoffen während der Konditionierung von Tierfutter.

Tiere bekommen ihr Futter vorwiegend entweder in pulvriger Form (Mehl) oder als Pressling (Pellet) verabreicht. Neben den Futterhauptkomponenten beinhaltet Tierfutter in aller Regel auch Zusatzstoffe wie Enzyme, Vitamine oder Antibiotika. Solche Zusatzstoffe können dem Futter auf unterschiedlichem Wege beigegeben werden.

US 6,056,822 beschreibt ein allgemeines Verfahren für beliebige Sorten von Tierfutter, bei dem Futterzusatzstoffe, wie z. B. Enzyme, in gelöster Form im sogenannten "PPA (Post Pelleting Application)-Verfahren", d. h. im Anschluss an den Pelletierungsprozess, auf abgekühlte Futterpellets aufgebracht werden. Der Vorteil dieser Methode ist darin zu sehen, dass die aufgebrachten Substanzen keinen Wirkungsverlust durch Hitzeeinwirkung infolge des der Futterpelletierung vorausgehenden Konditionierungsschrittes erleiden. Nachteilig wirkt sich hingegen aus, dass die Zusatzstoffe nicht pulverförmig auf die Pellets aufgebracht werden können und es sind zudem technisch aufwendige Vorrichtungen notwendig, um das Dosieren, Lösen und Aufspritzen von Enzymlösungen zu ermöglichen. Neben dem großen technischen Aufwand und den damit verbundenen Kosten besteht ein weiterer Nachteil des PPA-Verfahrens, dass die aufzubringenden Zusatzstoffe nicht immer homogen auf dem Futter verteilt sind.

DE-A 43 06 514 beschreibt ein Verfahren sowie eine Vorrichtung, in welcher innerhalb der Pelletiermaschine Presshilfsmittel auf Ligninsulfonbasis auf das zu pressende Futter zugegeben wird. Mit dieser Methode können allerdings nur solche Flüssigkeiten auf das Pressgut versprüht oder zersteubt werden, die eine Verarbeitung des Pressgutes in der Presse auf Grund von zu hohem Feuchtigkeitsgehalt nicht unterbinden. Ein weiterer Nachteil dieser Methode besteht darin, dass ein homogenes Vermischen der zugesetzten Flüssigkeit mit dem Pressgut auf diese Weise nicht gewährleistet ist.

WO 99/51107 zeigt ein Verfahren zur Herstellung von Fischfutter auf, bei dem gelöste Enzyme den Hauptfutterbestandteilen bereits vor dem Konditionierungsschritt zugegeben werden. Das in diesem Fall verwendete Enzym Transglutaminase dient zur Katalyse einer Reaktion von sich im Futter befindlichen Proteinen und bewirkt zudem eine Formstabilisierung der erzeugten Pellets. Der Vorteil dieser Methode ist darin zu sehen, das die Enzyme besser mit dem Futter durchmischt werden, was eine homogene Verteilung aller Zusatzstoffe zur Folge hat. Allerdings erfährt das Futtergemisch inklusive der zugegebenen Enzyme während des Konditionierungs- und des sich daran anschließenden Pelletierungsschrittes sehr großen Stress. Dieser Stress ist umso größer, je höher die angewendeten Temperaturen sowie die Verweilzeit des Futters in der Konditionierungssowie der Pelletierungseinheit ist. Dies hat zur Folge, dass die Enzymaktivität des Endproduktes sehr stark oder zumindestens beträchtlich eingeschränkt ist. Aus diesem Grund kann das Futtergemisch maximal 60 °C ausgesetzt werden und die Beimengung der Zusatzstoffe erfolgt im Vergleich zum PPA-Verfahren in einem sehr großen Überschuss.

WO 98/54980 beschreibt ein Verfahren, bei dem gelöste Enzyme mit einem Stabilisator zu Granulaten geformt werden, welche anschließend mit den Futterhauptkomponenten einen Konditionierungs- und Pelletierungsprozess durchlaufen. Auf Grund der Wirkung des aus Kohlenhydraten bestehenden Granulatträgermaterials zeigen die beigegebenen Enzyme eine erhöhte Stabilität, dennoch müssen sie in großen Überschuss verwendet werden, um den Wirkungsverlust während des Konditionierungs- und Pelletierungsprozesses ausgeglichen zu können. Ein weiterer Nachteil dieses Verfahrens ist auch darin zu sehen, dass die Herstellung der enzymhaltigen Granulate vorab mit zusätzlichen Kosten und Zeitaufwand verbunden ist.

Eine Vorrichtung und ein Vefahren gemäß dem Obergriff der Ansprüche 1 und 6 ist aus GB-A-2241862 bekannt.

Die der Erfindung zugrunde liegende Aufgabe besteht darin, ein Verfahren zu entwickeln, bei dem einerseits Zusatzstoffe dem Futter in geringerer Menge sowie kostengünstig, d. h. mit geringerem technischen Aufwand, beigegeben werden und andererseits eine gleichmäßige Verteilung dieser Zusatzstoffe im pelletierten Futterendprodukt vorliegt.

Erfindungsgemäß wird diese Aufgabe durch ein Verfahren sowie eine dem Verfahren zugrunde liegende Vorrichtung gelöst, welche folgende Merkmale enthalten:
a) Das Futter wird aus einem Behälter über eine Dosierschnecke an einer Eintrittsstelle in einen Konditioneur überführt,
b) das Futter wird im Konditioneur mit einer Mischschnecke von der Eintrittsstelle entlang einer Wegstrecke bis zu einer Austrittsstelle transportiert und ist dabei Dampf ausgesetzt,
c) dem Futter, das im Konditioneur x % der Wegstrecke zurückgelegt hat, werden ein oder mehrere Zusatzstoffe beigegeben, die durch eine oder mehrere Öffnungen in den Konditioneur eingeführt werden,
d) das Futter und die durch eine oder mehrere Öffnungen beigegebenen Zusatzstoffe werden auf den verbleibenden (100-x) % der Wegstrecke zu einem Gemisch vermischt,
e) das an der Austrittsstelle aus dem Konditioneur austretende Gemisch wird in eine Pelletierpresse überführt,
f) das Gemisch wird in der Pelletierpresse zu Pellets geformt
g) und die Pellets werden abschließend in eine Kühleinrichtung überführt.

Der große Vorteil dieses Verfahrens liegt darin, dass die Zusatzstoffe, insbesondere Enzyme, Vitamine, Carotinoide und Antibiotika, erst gegen Ende des Konditionierungsschrittes den Futterhauptkomponenten beigegeben werden. Auf diese Weise sind diese relativ hitzelabilen Stoffe nur für eine relativ kurze Zeit erhöhten Temperaturen ausgesetzt und erfahren weit weniger Stress als dies bei einem vollständigen Durchlaufen der Konditionierungseinheit der Fall wäre. Dadurch ist der Wirkungsverlust der zugesetzten Stoffe deutlich reduziert. Folglich sind deutlich geringere Mengen dieser zum Teil sehr teuren Stoffe notwendig, dies bewirkt eine deutliche Reduzierung der Produktionskosten von pelletiertem Tierfutter, das Zusatzstoffe enthält.

Ferner können in Folge der deutlich reduzierten Verweilzeit der Zusatzstoffe in der Konditionierungseinheit die beim Konditionierungs- und Pelletierungsschritt normalerweise üblichen Temperaturen von jeweils ca. 80°C (und darüber) angewendet werden, wodurch stabilere Pellets erzeugt werden. Ein weiterer Vorteil des erfindungsgemäßen Verfahrens ist darin zu sehen, dass die Zusatzstoffe mit den Futterhauptkomponenten noch genügend gut vermischt werden, um eine homogene Verteilung in den Futterpellets zu erreichen.

Ein weiterer Vorteil liegt darin, dass sich das erfindungsgemäße Verfahren insbesondere für die Zugabe von Feststoffen eignet, wodurch das sowohl apparativ als auch zeitaufwendige Lösen und exakte Dosieren der Lösung dieser Zusatzstoffe genauso wegfällt wie Haftungsprobleme auf den Pellets.

Anhand einer Zeichnung wird die Erfindung nachstehend erläutert.

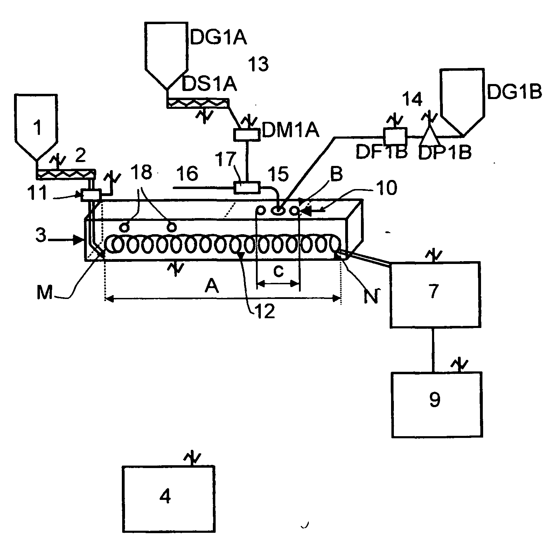

Die einzige Figur 1 zeigt in systematischer Weise das erfindungsgemäße Verfahren sowie die erfindungsgemäße Vorrichtung. Ein Behälter 1, der sich zur Aufbewahrung von Tierfutter, insbesondere Tierfuttermehl, eignet, ist an seinem unteren Ende mit einer Dosierschnecke 2 verbunden, an die sich ein Massenstrommesser 11 anschließt. Die Dosierschnecke 2 und der Massenstrommesser 11 sind an eine Recheneinheit 4 angeschlossen, die Dosierschnecke 2 verfügt zudem über einen variablen Stellantrieb, der beispielsweise elektrisch sein kann. Unter Betätigung der Dosierschnecke 2 wird Futter aus dem Behälter 1 in einen Konditioneur 3 überführt.

Das Tierfutter wird im Konditioneur 3 Dampf ausgesetzt, welcher durch eine oder mehrere Öffnungen 18, die am Gehäuse des Konditioneurs 3 angebracht sind, in das Innere des Konditioneurs 3 eingeleitet wird. Als Dampf wird bevorzugt Wasserdampf bei einem Druck von bevorzugt 1,5 bis 3 bar verwendet. Dieser Druckbereich kann gegebenenfalls über- bzw. unterschritten werden. Mit dem Dampf werden im Inneren des Konditioneurs 3 Temperaturen von bevorzugt 80 °C und darüber eingestellt. Dieser Temperaturbereich kann gegebenenfalls unterschritten werden. Das Einleiten des Dampfes sowie das Konditionieren des Futters mit Dampf im Konditioneur 3 erfolgt in dem Fachmann bekannter Weise.

Das aus dem Behälter 1 stammende Futter wird im Konditioneur 3 von einer Eintrittsstelle M entlang einer Wegstrecke A mit Hilfe einer im Inneren des Konditioneurs 3 angebrachten Mischschnecke 12 bis zu einer Austrittsstelle N transportiert. In einer zusätzlichen Ausführung der erfindungsgemäßen Vorrichtung wird das Futter im Konditioneur 3 von mehreren, parallel zueinander ausgerichteten Mischschnecken 12 von der Eintrittsstelle M entlang einer Wegstrecke A bis zu einer Austrittsstelle N transportiert, wobei bevorzugt 2 Mischschnecken 12 verwendet werden. Die Mischschnecke 12 ist an die Recheneinheit 4 angeschlossen und verfügt zudem über einen elektrischen Antrieb.

Im oberen Teil des Konditioneur 3 sind in einem sich oberhalb der Wegstrecke A befindlichen Bereich B eine oder mehrere Öffnungen 10 angebracht, die so beschaffen sind, dass ein oder mehrere Zusatzstoffe 5 in das Innere des Konditioneurs 3 eingeführt werden können, um dort dem Futter beigegeben zu werden, das bereits x % der Wegstrecke A von der Mischschnecke 12 transportiert wurde. Auf den verbleibenden (100-x) % der Wegstrecke A wird das Futter zusammen mit den Zusatzstoffen 5 bis zur Austrittsstelle N transportiert und durch die Schneckenbewegung durchmischt, wodurch ein Gemisch 6 erhalten wird. Das Gemisch 6 setzt sich aus den Futterhauptbestandteilen, die aus dem Behältnis 1 stammen, sowie den über die Öffnung 10 zugegebenen Zusatzstoffe 5 zusammen.

Der Wert x der Wegstrecke A liegt in einem Bereich zwischen 50 und 100. Die Dimensionen der Wegstrecke A werden anhand des nachfolgenden Beispieles näher erläutert. Der Konditioneur 3 hat in dem Fachmann bekannten Ausführungen eine Länge von ca. 2 m. Dies bedeutet, dass auch die Wegstrecke A eine Länge von ungefähr 2 m aufweist. Der Einfachheit halber sei die Länge der Wegstrecke A in diesem Beispiel exakt 2 m. In der erfindungsgemäßen Vorrichtung treffen die über die Öffnungen 10 zugegebenen Zusatzstoffe 5 somit auf Futterhauptkomponenten, welche mindestens 1 m, aber weniger als 2 m auf der Wegstrecke A von der Mischschnecke 12 bereits transportiert worden sind. Es wird ausdrücklich darauf hingewiesen, dass die Länge des Konditioneur 3 sowohl größer als auch kleiner als 2 m sein kann. Die Länge der Wegstrecke A verändert sich ebenfalls dementsprechend und der Bereich der Wegstrecke A, in dem die Zusatzstoffe 5 auf die Futterhauptkomponenten treffen, ist in analoger Weise zum obigen Beispiel zu ermitteln. Dieses Prinzip kann auf sämtliche, dem Fachmann bekannten Ausführungen von Konditioneuren angewendet werden.

Die Öffnungen 10 sind für den Fall, dass es sich um 2 oder mehrere Öffnungen handelt, im oberen Teil des Behältnisses 3 im Bereich B entlang einer Wegstrecke C angeordnet, die entweder senkrecht oder parallel zur Wegstrecke A verläuft. Eine asymmetrische Anordnung bzw. eine von der linienförmigen Anordnung entlang der Wegstrecke C abweichenden Anordnung der Öffnungen 10 im Bereich B ist ebenfalls denkbar. Als Öffnung 10 kann jede Art von Öffnung verwendet werden, die sich zum Einleiten von Feststoffen und / oder Flüssigkeiten eignen, insbesondere Düsen sowie Vorrichtungen, bei denen Flüssigkeiten und / oder Feststoffe unter Zuhilfenahme von Gasen, insbesondere Luft, eingebracht werden können.

Die erfindungsgemäße Vorrichtung ist besonders geeignet zur Einmischung von festen Zusatzstoffen 5 zu Futter. Als feste Zusatzstoffe 5 eignen sich sämtliche Stoffe, die in der Futtermittelproduktion Verwendung finden, besonders Antibiotika, Vitamine und Carotinoide, insbesondere Enzyme. Die festen Zusatzstoffe 5 befinden sich in einem Dosiergefäß DG1A, aus welchem sie über eine Dosierschnecke DS1A, einer Messvorrichtung DM1A sowie den dafür notwendigen Leitungen zu einer Schleuse 17 transportiert werden. Das Dosiergefäß DG1A, die Dosierschnecke DS1A und die Messvorrichtung DM1A sind die wesentlichen Komponenten der Dosiereinheit 13.

Die Schleuse 17 ist über eine Leitung 16 an eine Gasquelle angeschlossen. Als Gas wird insbesondere Druckluft verwendet. Es können aber auch andere Gase oder Gasgemische verwendet werden, bei deren Kontakt mit den Zusatzstoffen sowie den Futterhautkomponenten keine gesundheitsschädlichen Folgen zu befürchten sind. Die Gasquelle ist nicht Bestandteil der erfindungsgemäßen Vorrichtung, sie ist extern von der erfindungsgemäßen Vorrichtung angebracht, ihr Anschluss an die Leitung 16 erfolgt in dem Fachmann bekannter Weise. Die Schleuse 17 ist so konzipiert, dass die aus der Dosiereinheit 13 stammenden Zusatzstoffe 5 mit dem aus der Leitung 16 kommenden Gas vereint werden und durch den Gasdruck über eine Einlassleitung 15, die sich an die Schleuse 17 anschließt, dem Konditioneur 3 durch eine oder mehrere Öffnungen 10 zugeführt werden. Die Schleuse 17 bewirkt zudem, dass kein Dampf aus dem Konditioneur 3 entweichen kann und unterbindet somit eine eventuelle Blockierung der einzelnen Komponenten der Dosiereinheit 13 infolge von Feuchtigkeitszufuhr. Die Einlassleitung 15 kann gegebenenfalls so beschaffen sein, dass sie über eine oder mehrere Verzweigungen an mehrere Öffnungen 10 des Konditioneurs 3 gleichzeitig angeschlossen werden kann.

Erfindungsgemäß kann die Schleuse 17 auch so beschaffen sein, dass in analoger Weise zu ihrer oben beschriebenen Ausführung mehrere Dosiereinheiten 13 an die Schleuse 17 angeschlossen sind, wobei die n-te Dosiereinheit 13 jeweils im Wesentlichen aus einem Dosiergefäß DGnA, einer Dosierschnecke DSnA und einer Messvorrichtung DMnA besteht. Im Allgemeinen wird für jeden festen Zusatzstoff 5 eine separate Dosiereinheit 13 bereitgestellt.

Des Weiteren besteht die Möglichkeit, dass jede Dosiereinheit 13 mit jeweils einer eigenen Schleuse 17 verbunden ist, die jeweils wiederum an eine Gasquelle angeschlossen ist. Die Zusatzstoffe 5 werden aus der jeweiligen Schleuse 17 durch den Gasdruck über die jeweilige Einlassleitung 15 dem Konditioneur 3 durch eine oder mehrere Öffnungen 10 zugeführt. Diese Ausführung der erfindungsgemäßen Vorrichtung besteht somit aus n Dosiereinheiten 13, n Schleusen 17 und n Einlassleitungen 15.

Der Konditioneur 3 ist so konzipiert, dass die Zusatzstoffe 5 entweder vollständig oder teilweise auch in flüssiger bzw. gelöster Form durch die Öffnungen 10 den Futterhauptkomponenten beigegeben werden können. Für diesen Fall werden eine oder mehrere Dosiereinheiten 13 durch eine oder mehrere Dosiereinheiten 14 ersetzt. Die flüssigen bzw. gelösten Zusatzstoffe 5 befinden sich in einem Dosiergefäß DG1B, aus welchem sie über eine Dosierpumpe DP1B, einen Durchflussmesser DF1B sowie die dafür notwendigen Leitungen dem Konditioneur 3 durch eine oder mehrere Öffnungen 10 zugeführt werden. Eine Dosiereinheit 14 besteht im Wesentlichen aus dem Dosiergefäß DG1B, der Dosierpumpe DP1B und dem Durchflussmesser DF1B. Die n-te Dosiereinheit 14 besteht jeweils im Wesentlichen aus einem Dosiergefäß DGnB, einer Dosierpumpe DPnB und einem Durchflussmesser DFnB. Im Allgemeinen wird für jeden flüssigen oder gelösten Zusatzstoff 5 eine separate Dosiereinheit 14 bereitgestellt.

Die Dosierschnecken DSnA und die Messvorrichtungen DMnA sowie gegebenenfalls die Dosierpumpen DPnB und die Durchflussmesser DFnB sind an die Recheneinheit 4 angeschlossen, die Dosierschnecken DSnA und gegebenenfalls die Dosierpumpen DPnB verfügen zusätzlich über einen elektrischen Stellantrieb.

Die einzelnen Vorrichtungsbestandteile sind im Regelfall so ausgerichtet, dass die Zusatzstoffe 5 zur Gesamtfuttermenge in einem Verhältnis beigegeben werden können, das im Bereich von 0.001 bis 0.2 Gew.-% , bevorzugt 0.005 bis 0.02 Gew.-%, liegt. Problemlos lässt sich diese Vorrichtung aber auch auf größere Mengen an Zusatzstoffen 5 übertragen.

Das Gemisch 6 tritt an der Austrittsstelle N aus dem Konditioneur 3 aus und wird in die Pelletierpresse 7 überführt. Mit der Pelletierpresse 7 werden aus dem Gemisch 6 Futterpresslinge (Pellets) 8 geformt. Als Pelletierpresse 7 können alle dem Fachmann gängigen Vorrichtungen verwendet werden, die es ermöglichen, bei einer Temperatur von vorzugsweise 65 bis 90°C im Durchflussverfahren Futterpellets zu pressen. Gegebenenfalls kann dieser Temperaturbereich aber auch über- bzw. unterschritten werden. Mit der Pelletierpresse 7 werden Pellets 8 mit einem mittleren Durchmesser von 1 bis 10 mm, bevorzugt 2 bis 8 mm, erzeugt, gegebenenfalls kann dieser Bereich aber auch über- bzw. unterschritten werden. Die Pelletierpresse 7 ist an die Recheneinheit 4 angeschlossen und verfügt zusätzlich über einen elektrischen Stellantrieb.

Aus der Pelletierpresse 7 werden die fertigen Futterpellets 8 in eine Kühleinrichtung 9 überführt. Die Kühleinrichtung 9 ist mit der Recheneinheit 4 verbunden. Als Kühleinrichtung 9 können alle dem Fachmann gängigen Vorrichtungen verwendet werden.

Das über die Rechneinheit 4 gesteuerte Zusammenspiel der einzelnen Komponenten der erfindungsgemäßen Vorrichtung untereinander soll im Folgenden anhand eines möglichen Anwendungsbeispieles näher erläutert werden.

Das Futter wird zunächst über die Dosierschnecke 2 aus dem Behälter 1 in den Konditioneur 3 überführt, in dem sich die Mischschnecke 12 befindet, welche mit einer konstanten Drehgeschwindigkeit betrieben wird. Die Recheneinheit 4 reguliert dabei die Drehgeschwindigkeit der Dosierschnecke 2, wobei die Drehgeschwindigkeit der Dosierschnecke 2 aber auch manuell eingestellt werden kann. Die Drehgeschwindigkeit der Dosierschnecke 2 wird so reguliert, dass eine optimale Kapazität und Qualität an Pellets in der Pelletierpresse 7 erzeugt werden kann. Im Konditioneur 3 wird das Futter von der Eintrittsstelle M entlang der Wegstrecke A mit der Mischschnecke 12 bis zu der Austrittsstelle N transportiert. Die Zugabe der Zusatzstoffe 5 erfolgt durch die Öffnung 10, nachdem das Futter mehr als die Hälfte der Wegstrecke A zurückgelegt hat.

Die Menge der durch die Öffnung 10 in den Konditioneur 3 zugegebenen Zusatzstoffe 5 wird ebenfalls von der Recheneinheit 4 über die Dosierschnecken DSnA sowie gegebenenfalls die Pumpen DPnB gesteuert. Die Recheneinheit 4 reguliert die zugegebene Menge an festen Zusatzstoffen 5 über die Drehgeschwindigkeit der Dosierschnecken DSnA anhand der von den jeweiligen Messvorrichtungen DMnA gemessenen Werte. Je nach gewünschter Endkonzentration der Zusatzstoffen 5 im Verhältnis zur Gesamtfuttermenge wird die Drehgeschwindigkeit der Dosierschnecken DSnA von der Recheneinheit 4 auf die vom Massenstrommesser 11 gemessene Menge an Futterhauptkomponenten abgestimmt. Gegebenenfalls wird die über die Pumpen DPnB zugegebene Menge an flüssigen oder gelösten Zusatzstoffen 5 von der Recheneinheit 4 anhand der von den jeweiligen Durchflussmessern DFnB gemessenen Werte ebenfalls reguliert. Je nach gewünschter Endkonzentration der Zusatzstoffen 5 im Verhältnis zur Gesamtfuttermenge wird die Pumpgeschwindigkeit der Pumpen DPnB auf die vom Massenstrommesser 11 gemessene Menge an Futterhauptkomponenten abgestimmt.

Wenn das Gemisch 6, das aus den Futterhauptkomponenten und den Zusatzstoffen 5 besteht, im Konditioneur 3 an der Austrittsstelle N angekommen ist, wird es von dort in die Pelletierpresse 7 weitertransportiert und zu Pellets gepresst, welche anschließend in die Kühleinrichtung 9 überführt werden. Die Drehgeschwindigkeit der Dosierschnecke 2 bestimmt somit auch die Verweilzeit des Futters in der Pelletierpresse 7. Die Pelletierpresse 7 und die Kühleinrichtung 9 können von der Recheneinheit 4 gesteuert werden.

Beim Einschalten sowie Ausschalten der erfindungsgemäßen Vorrichtung sind die Einlauf- bzw. Auslaufzeiten der einzelnen Vorrichtungskomponenten sowie das in den Windungen der Mischschnecke 12 gespeicherte Volumen an Futterhauptkomponenten und gegebenenfalls an Zusatzstoffen 5 von Bedeutung. Diese empirisch festgestellten Größen werden von der Recheneinheit 4 mitberücksichtigt, die einzelnen Vorrichtungskomponenten sind diesbezüglich aufeinander abgestimmt. Beispielsweise wird nach dem Abstellen der Dosierschnecke 2 die Mischschnecke 12 für die Zeit weiterbetrieben, die das Futter zum Zurücklegen der Wegstrecke A benötigt. Die Abstimmung der übrigen, von der Recheneinheit 4 gesteuerten, Vorrichtungskomponenten erfolgt sinngemäß.

Im Falle von Störungen in einer der Vorrichtungskomponenten, werden die sich jeweils stromaufwärts befindlichen Vorrichtungskomponenten von der Recheneinheit 4 abgestellt, während die sich jeweils stromabwärts befindlichen Vorrichtungskomponenten mit der jeweiligen Auslaufzeit weiterlaufen.

Die Recheneinheit 4 stimmt somit insbesondere die Drehgeschwindigkeiten der Dosierschnecke 2 mit den Dosierschnecken DSnA bzw. gegebenenfalls der Pumpen DPnB ab, um die erforderliche Menge an Zusatzstoffen 5 dem Futter beimengen zu können.

Sämtliche Komponenten der erfindungsgemäßen Vorrichtung sind so konzipiert, dass neben dem rechnergesteuerten Standardbetrieb auch ein manueller Betrieb der einzelnen Komponente wie in den Ansprüchen derfiniert möglich ist.

### Bezugszeichenliste

- 1: Behälter
- 2: Dosierschnecke
- 3: Konditioneur
- 4: Recheneinheit
- 5: Zusatzstoff
- 6: Gemisch
- 7: Pelletierpresse
- 8: Pellets
- 9: Kühleinrichtung
- 10: Öffnung
- 11: Massenstrommesser
- 12: Mischschnecke
- 13: Dosiereinheit
- 14: Dosiereinheit
- 15: Einlassleitung
- 16: Leitung
- 17: Schleuse
- 18: Öffnung

Wegstrecke (A)
Bereich (B)
Wegstrecke (C)
Eintrittsstelle (M)
Austrittsstelle (N)

DG = Dosiergefäß
DM = Messvorrichtung
DF = Durchflussmesser
DP = Pumpe
DS = Dosierschnecke

## Patentansprüche

1. Rechnergestützte Vorrichtung zur Einmischung von Zusatzstoffen während der Konditionierung von Tierfutter, **dadurch gekennzeichnet, dass**
a) Futter aus einem Behälter (1) über eine Dosierschnecke (2) an einer Eintrittsstelle (M) in einen Konditioneur (3) überführt wird,
b) das Futter im Konditioneur (3) mit einer Mischschnecke (12) von der Eintrittsstelle (M) entlang einer Wegstrecke (A) bis zu einer Austrittsstelle (N) transportiert wird und dabei Dampf ausgesetzt ist,
c) dem Futter, das im Konditioneur (3) x % der Wegstrecke (A) zurückgelegt hat, ein oder mehrere Zusatzstoffe (5) beigegeben werden, die durch eine oder mehrere Öffnungen (10) in den Konditioneur (3) eingeführt werden,
d) das Futter und die durch eine oder mehrere Öffnungen (10) beigegebenen Zusatzstoffe (5) auf den verbleibenden (100-x) % der Wegstrecke (A) zu einem Gemisch (6) vermischt werden,
e) das an der Austrittsstelle (N) aus dem Konditioneur (3) austretende Gemisch (6) in die Pelletierpresse (7) überführt wird,
f) das Gemisch (6) in der Pelletierpresse (7) zu Pellets (8) geformt wird
g) und die Pellets (8) abschließend in eine Kühleinrichtung (9) überführt werden.

2. Rechnergestützte Vorrichtung nach Anspruch 1, **dadurch gekennzeichnet, dass** das Futter im Konditioneur (3) von mehreren, parallel zueinander ausgerichteten Mischschnecken (12) von der Eintrittsstelle (M) entlang einer Wegstrecke (A) bis zu einer Austrittsstelle (N) transportiert wird und dabei Dampf ausgesetzt ist.

3. Rechnergestützte Vorrichtung nach Anspruch 1 oder 2, **dadurch gekennzeichnet, dass** der Wert x der Wegstrecke (A) in einem Bereich zwischen 50 und 100 liegt.

4. Rechnergestützte Vorrichtung nach einem der Ansprüchen 1 bis 3, **dadurch gekennzeichnet, dass** die Öffnungen (10) über eine Einlassleitung (15) und eine Schleuse (17), die über eine Leitung (16) an eine Gasquelle angeschlossen ist, mit einer oder mehreren Dosiereinheiten (13) verbunden sind, die sich jeweils im Wesentlichen aus,
a) einem Dosiergefäß (DG1A)
b)einer Messvorrichtung (DM1A) und
c) einer Dosierschnecke (DS1A)
zusammensetzen.

5. Rechnergestützte Vorrichtung nach einem der Ansprüchen 1 bis 4, **dadurch gekennzeichnet, dass** die Öffnungen (10) mit einer oder mehreren Dosiereinheiten (14) verbunden sind, die sich jeweils im Wesentlichen aus,
a) einem Dosiergefäß (DG 1 B)
b)einem Durchflussmesser (DF1B) und
c) einer Pumpe (DP1B)
zusammensetzen.

6. Verfahren zur Einmischung von Zusatzstoffen während der Konditionierung von Tierfutter, **dadurch gekennzeichnet, dass**
a) Futter aus einem Behälter (1) über eine Dosierschnecke (2) an einer Eintrittsstelle (M) in einen Konditioneur (3) überführt wird,
b) das Futter im Konditioneur (3) mit einer Mischschnecke (12) von der Eintrittsstelle (M) entlang einer Wegstrecke (A) bis zu einer Austrittsstelle (N) transportiert wird und dabei Dampf ausgesetzt ist,
c) dem Futter, das im Konditioneur (3) x % der Wegstrecke (A) zurückgelegt hat, ein oder mehrere Zusatzstoffe (5) beigegeben werden, die durch eine oder mehrere Öffnungen (10) in den Konditioneur (3) eingeführt werden,
d) das Futter und die durch eine oder mehrere Öffnungen (10) beigegebenen Zusatzstoffe (5) auf den verbleibenden (100-x) % der Wegstrecke (A) zu einem Gemisch (6) vermischt werden,
e) das an der Austrittsstelle (N) aus dem Konditioneur (3) austretende Gemisch (6) in die Pelletierpresse (7) überführt wird,
f) das Gemisch (6) in der Pelletierpresse (7) zu Pellets (8) geformt wird
g) und die Pellets (8) abschließend in eine Kühleinrichtung (9) überführt werden.

7. Verfahren nach Anspruch 6, **dadurch gekennzeichnet, dass** die Zusatzstoffe (5) in fester und/oder gelöster Form dem Futter beigegeben werden.

8. Verfahren nach Anspruch 7, **dadurch gekennzeichnet, dass** als Zusatzstoff (5) Enzyme verwendet werden.

9. Verfahren nach Anspruch 7, **dadurch gekennzeichnet, dass** als Zusatzstoff (5) Vitamine verwendet werden.

10. Verfahren nach Anspruch 7, **dadurch gekennzeichnet, dass** als Zusatzstoff (5) Antibiotika verwendet werden.

11. Verfahren nach Anspruch 7, **dadurch gekennzeichnet, dass** als Zusatzstoff (5) Carotinoide verwendet werden.

12. Verfahren nach einem der Ansprüche 6 bis 11, **dadurch gekennzeichnet, dass** die Pellets (8) 0.001 bis 0.2 Gew.-% , bevorzugt 0.005 bis 0.02 Gew.-%, an einem oder mehreren Zusatzstoffen (5) enthalten.

13. Verfahren nach einem der Ansprüche 6 bis 12, **dadurch gekennzeichnet, dass** die Pellets (8) einen mittleren Durchmesser von 1 bis 10 mm, bevorzugt 2 bis 8 mm, haben.

## Claims

1. A computer-aided apparatus for adding additives during the conditioning of animal feed, in which
a) the feed is transferred from a container (1) via a feed screw (2) at an inlet point (M) into a conditioner (3),
b) the feed is transported in the conditioner (3) by a mixing screw (12) from the inlet point (M) along a path (A) to an exit point (N), and is exposed to vapor in the course of this,
c) one or more additives (5) which are introduced into the conditioner (3) through one or more ports (10) are added to the feed which has passed through x% of the path (A) in the conditioner (3),
d) the feed and the additives (5) added through one or more ports (10) are mixed on the remaining (100-x)% of the path (A) to form a mixture (6),
e) the mixture (6) leaving the conditioner (3) at the exit point (N) is transferred to the pelleting press (7),
f) the mixture (6) is formed into pellets (8) in the pelleting press (7)
g) and the pellets (8) are finally transferred to a cooling device (9).

2. The computer-aided apparatus according to claim 1, wherein the feed is transported in the conditioner (3) by a plurality of parallel mixing screws (12) from the inlet point (M) along a path (A) to an exit point (N), and is exposed to vapor in the course of this.

3. The computer-aided apparatus according to claim 1 or 2, wherein the value x of the path (A) is in a range from 50 to 100.

4. The computer-aided apparatus according to one of claims 1 to 3, wherein the ports (10) are connected via an inlet line (15) and a lock (17) connected to a gas source via a line (16) to one or more metering units (13), each of which essentially consists of
a) a metering vessel (DG1A)
b) a measuring apparatus (DM1A) and
c) a feed screw (DS1A).

5. The computer-aided apparatus according to one of claims 1 to 4, wherein the ports (10) are connected to one or more metering units (14), each of which essentially consists of
a) a metering vessel (DG1B)
b) a flow meter (DF1B) and
c) a pump (DP1B).

6. The process for adding additives during the conditioning of animal feed, wherein
a) the feed is transferred from a container (1) via a feed screw (2) at an inlet point (M) into a conditioner (3),
b) the feed is transported in the conditioner (3) by a mixing screw (12) from the inlet point (M) along a path (A) to an exit point (N), and is exposed to vapor in the course of this,
c) one or more additives (5) which are introduced into the conditioner (3) through one or more ports (10) are added to the feed which has passed through x% of the path (A) in the conditioner (3),
d) the feed and the additives (5) added through one or more ports (10) are mixed on the remaining (100-x)% of the path (A) to form a mixture (6),
e) the mixture (6) leaving the conditioner (3) at the exit point (N) is transferred to the pelleting press (7),
f) the mixture (6) is formed into pellets (8) in the pelleting press (7)
g) and the pellets (8) are finally transferred to a cooling device (9).

7. The process according to claim 6, wherein the additives (5) are added to the feed in solid and/or dissolved form.

8. The process according to claim 7, wherein the additive (5) is enzymes.

9. The process according to claim 7, wherein the additive (5) is vitamins.

10. The process according to claim 7, wherein the additive (5) is antibiotics.

11. The process according to claim 7, wherein the additive (5) is carotenoids.

12. The process according to one of claims 6 to 11, wherein the pellets (8) comprise from 0.001 to 0.2% by weight, preferably from 0.005 to 0.02% by weight, of one or more additives (5).

13. The process according to one of claims 6 to 12, wherein the pellets (8) have a mean diameter of from 1 to 10 mm, preferably from 2 to 8 mm.

## Revendications

1. Dispositif assisté par ordinateur pour mélanger des additifs pendant le conditionnement d'aliments pour animaux, **caractérisé en ce que** :
a) des aliments pour animaux sont transférés d'un récipient (1), via une vis de dosage sans fin (2), à un point d'entrée (M) d'un conditionneur (3),
b) les aliments pour animaux dans le conditionneur (3) sont transportés, avec une vis de mélange sans fin (12), du point d'entrée (M), sur une distance (A), jusqu'à un point de sortie (N) et sont en l'occurrence exposés à de la vapeur,
c) on ajoute aux aliments pour animaux, qui ont parcouru x% de la distance (A) dans le conditionneur (3), un ou plusieurs additifs (5) qui sont introduits par une ou plusieurs ouvertures (10) dans le conditionneur (3),
d) on mélange les aliments pour animaux et les additifs (5) ajoutés par une ou plusieurs ouvertures (10) sur les (100-x)% restants de la distance (A) pour former un mélange (6),
e) le mélange (6) sortant du conditionneur (3) au point de sortie (N) est transféré dans la presse à pellets (7),
f) le mélange (6) est transformé en pellets (8) dans la presse à pellets (7), et
g) les pellets (8) sont enfin transférés dans un dispositif de refroidissement (9).

2. Dispositif assisté par ordinateur selon la revendication 1, **caractérisé en ce que** les aliments pour animaux dans le conditionneur (3) sont transportés par plusieurs vis de mélange sans fin (12) orientées parallèlement les unes aux autres du point d'entrée (M), sur une distance (A), jusqu'à un point de sortie (N) et sont en l'occurrence exposés à de la vapeur.

3. Dispositif assisté par ordinateur selon la revendication 1 ou 2, **caractérisé en ce que** la valeur x de la distance (A) se situe dans une plage entre 50 et 100.

4. Dispositif assisté par ordinateur selon l'une quelconque des revendications 1 à 3, **caractérisé en ce que** les ouvertures (10) sont raccordées à une ou plusieurs unités de dosage (13) via une conduite d'entrée (15) et un sas (17), qui est raccordé via une conduite (16) à une source de gaz, lesdites unités de dosage se composant respectivement sensiblement :
a) d'un récipient de dosage (DG1A),
b) d'un dispositif de mesure (DM1A) et
c) d'une vis de dosage sans fin (DS1A).

5. Dispositif assisté par ordinateur selon l'une quelconque des revendications 1 à 4, **caractérisé en ce que** les ouvertures (10) sont raccordées à une ou plusieurs unités de dosage (14) qui se composent respectivement sensiblement .
a) d'un récipient de dosage (DG1B),
b) d'un débitmètre (DF1B) et
c) d'une pompe (DP1B).

6. Procédé pour mélanger des additifs pendant le conditionnement d'aliments pour animaux,
**caractérisé en ce que** :
a) des aliments pour animaux sont transférés d'un récipient (1), via une vis de dosage sans fin (2), à un point d'entrée (M) dans un conditionneur (3),
b) les aliments pour animaux dans le conditionneur (3) sont transportés, avec une vis de mélange sans fin (12), d'un point d'entrée (M), sur une distance (A), jusqu'à un point de sortie (N) et sont en l'occurrence exposés à de la vapeur,
c) on ajoute aux aliments pour animaux, qui ont parcouru x% de la distance (A) dans le conditionneur (3), un ou plusieurs additifs (5) qui sont introduits par une ou plusieurs ouvertures (10) dans le conditionneur (3),
d) on mélange les aliments pour animaux et les additifs (5) ajoutés par une ou plusieurs ouvertures (10) sur les (100-x)% restants de la distance (A) pour former un mélange (6),
e) le mélange (6) sortant du conditionneur (3) au point de sortie (N) est transféré dans la presse à pellets (7),
f) le mélange (6) dans la presse à pellets (8) est transformé en pellets (8) et
g) les pellets (8) sont enfin transférés dans un dispositif de refroidissement (9).

7. Procédé selon la revendication 6, **caractérisé en ce que** les additifs (5) sont ajoutés aux aliments sous forme solide et/ou dissoute.

8. Procédé selon la revendication 7, **caractérisé en ce que** l'on utilise des enzymes comme additif (5).

9. Procédé selon la revendication 7, **caractérisé en ce que** l'on utilise des vitamines comme additif (5).

10. Procédé selon la revendication 7, **caractérisé en ce que** l'on utilise des antibiotiques comme additif (5).

11. Procédé selon la revendication 7, **caractérisé en ce que** l'on utilise des caroténoïdes comme additif (5).

12. Procédé selon l'une quelconque des revendications 6 à 11, **caractérisé en ce que** les pellets (8) contiennent 0,001 à 0,2% en poids, de préférence 0,005 à 0,02% en poids, d'un ou de plusieurs additifs (5).

13. Procédé selon l'une quelconque des revendications 6 à 12, **caractérisé en ce que** les pellets (8) présentent un diamètre moyen de 1 à 10 mm, de préférence de 2 à 8 mm.
